# EUROPEAN PATENT APPLICATION

(11) **EP 2 293 420 A1**
(43) Date of publication of application: **09.03.2011**
(21) Application number: 09754487.8
(22) Date of filing: 23.02.2009
(51) Int. Cl.: H02K 7/18, E03C 1/05, H02K 21/24

(54) **FAUCET GENERATOR**

(30) Priority: 27.05.2008 JP 2008137713; 11.06.2008 JP 2008153576
(71) Applicant: Toto Ltd., Fukuoka 802-8601 (JP)
(72) Inventor: ONODERA, Naoyuki, Kitakyushu-shi Fukuoka 802-8601 (JP); SATO, Tomoko, Kitakyushu-shi Fukuoka 802-8601 (JP); KUROISHI, Masahiro, Kitakyushu-shi Fukuoka 802-8601 (JP); SHIMIZU, Takeshi, Kitakyushu-shi Fukuoka 802-8601 (JP)
(74) Representative: Granleese, Rhian Jane
(86) International application number: PCT/JP2009/053225
(87) International publication number: WO 2009/144979

(57) **Abstract**

A faucet generator includes: an enclosure including a supply water inflow port and a supply water outflow port and having a supply water flow channel formed in the enclosure; a bucket provided in the supply water flow channel and including a bucket blade; a magnet rotatable integrally with the bucket; a bearing configured to support a force received by the bucket and the magnet due to water flow; a coil configured to generate an electromotive force by rotation of the magnet; and a yoke including a base surrounding the coil and a plurality of inductors extending out from the base and spaced from each other. The coil is provided on a downstream side of the water supply flow channel relative to the magnet and opposed to the magnet. The magnet is magnetized at an outer peripheral surface intersecting with a plane perpendicular to a rotation center axis, and not is magnetized at an end surface opposed to the coil. The inductor is opposed to the outer peripheral surface of the magnet and provided outside the enclosure.

## Description

### [Technical Field]

This invention relates to a faucet generator for generating electrical power using the flow of supply water.

### [Background Art]

Conventionally, there is known an automatic faucet device equipped with a sensor for sensing a hand stretched out below the tap to automatically discharge water from the tap Furthermore, there is also known a device with a small power generator disposed in the flow channel of the automatic faucet device of the aforementioned type. The power obtained by this power generator is accumulated to supplement power for circuits including the aforementioned sensor (see, e.g., JP-A 2004-336982 (Kokai)).

Such faucet devices are based on axial flow generators, which are easy to downsize. The axial flow generator can be a generator of the "radial configuration" with a coil disposed radially outside a magnet via an inductor (see, e.g., FIG. 4 of JP-A 2004-336982(Kokai)), and a generator of the "axial configuration" with a coil opposed across an inductor to the end surface of a magnet facing the supply water flow channel (see, e.g., FIG. 5 of JP-A 2004-336982(Kokai)). In the generator of the "radial configuration", magnetic flux is radially formed between the magnet and the inductor. Thus, the generator of the "radial configuration" is characterized in that electromagnetic force acts in the radial direction. On the other hand, in the generator of the "axial configuration", magnetic flux is axially formed between the magnet and the inductor. Thus, the generator of the "axial configuration" is characterized in that electromagnetic force acts in the axial direction.

For applications requiring a generator with a small radial dimension, it is more preferable to use a generator of the "axial configuration" as disclosed in FIG. 5 of JP-A 2004-336982(Kokai) than a generator of the "radial configuration". However, in such an axial flow generator of the "axial configuration', the acting direction of water flow coincides with the acting direction of electromagnetic force. This causes the following problems.

First, because the acting direction of water flow coincides with the acting direction of electromagnetic force, the rotor (bucket portion) is subjected to a strong biasing force in one direction. Thus, the sliding surface of rotation is prone to wear. Hence, the distance between the magnet and the inductor changes within a very short time of use. This results in changing the electromagnetic force acting therebetween and the amount of magnetic flux formed therebetween. Consequently, the amount of power generation is varied over time.

Furthermore, because the sliding surface of rotation is prone to wear, the flow channel in the enclosure formed between the magnet and the inductor is also narrowed within a very short time of use Thus, dust flowing in water becomes likely to clog Furthermore, only with a slight vibration of the magnet due to water flow, the magnet becomes likely to interfere with the inner wall surface of the enclosure. That is, the reliability of operation as a faucet generator is also low.
[Patent Citation 1]
JP-A 2004-336982

### [Disclosure of Invention]

### [Technical Problem]

This invention can provide a faucet generator capable of suppressing variation in the amount of power generation over a long period of time and maintaining high reliability over a long period of time while downsizing the radial dimension.

According to an aspect of the invention, there is provided a faucet generator including: an enclosure including a supply water inflow port and a supply water outflow port and having a supply water flow channel formed in the enclosure; a bucket provided in the supply water flow channel and including a bucket blade; a magnet rotatable integrally with the bucket; a bearing configured to support a force received by the bucket and the magnet due to water flow; a coil configured to generate an electromotive force by rotation of the magnet; and a yoke including a base surrounding the coil and a plurality of inductors extending out from the base and spaced from each other, the coil being provided on a downstream side of the water supply flow channel relative to the magnet and opposed to the magnet, the magnet being magnetized at an outer peripheral surface intersecting with a plane perpendicular to a rotation center axis, and not being magnetized at an end surface opposed to the coil, and the inductor being opposed to the outer peripheral surface of the magnet and provided outside the enclosure

According to another aspect of the invention, there is provided a faucet generator including: an enclosure including a supply water inflow port and a supply water outflow port and having a supply water flow channel formed in the enclosure; a bucket provided in the supply water flow channel and including a bucket blade; a magnet rotatable integrally with the bucket; a bearing configured to support a force received by the bucket and the magnet due to water flow; a coil configured to generate an electromotive force by rotation of the magnet; and a yoke including a base surrounding the coil and a plurality of inductors extending out from the base and spaced from each other, the coil being opposed to the magnet on an upstream side of the water supply flow channel, the coil being provided on the upstream side of the water supply flow channel relative to the magnet and opposed to the magnet, the magnet being magnetized at an outer peripheral surface intersecting with a plane perpendicular to a rotation center axis, and not being magnetized at an end surface opposed to the coil, and the inductor being opposed to the outer peripheral surface of the magnet and provided outside the enclosure.

### [Brief Description of Drawings]

[Fig. 1]

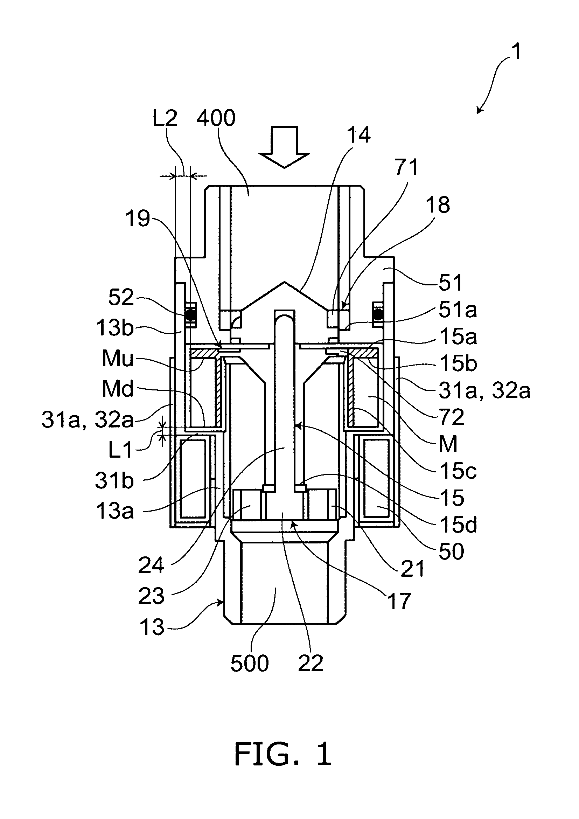

   FIG. 1 is a schematic sectional view for describing a generator according to an embodiment of the invention.
[Fig. 2]

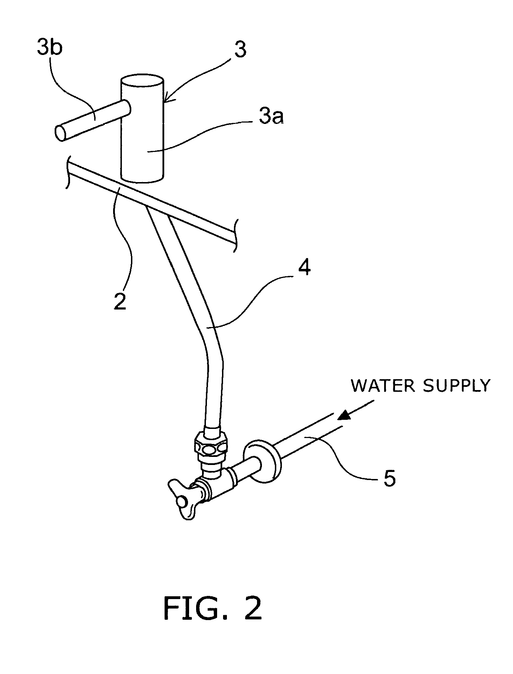

   FIG. 2 is a schematic view showing an installation example of an automatic faucet device equipped with the generator according to the embodiment of the invention.
[Fig. 3]

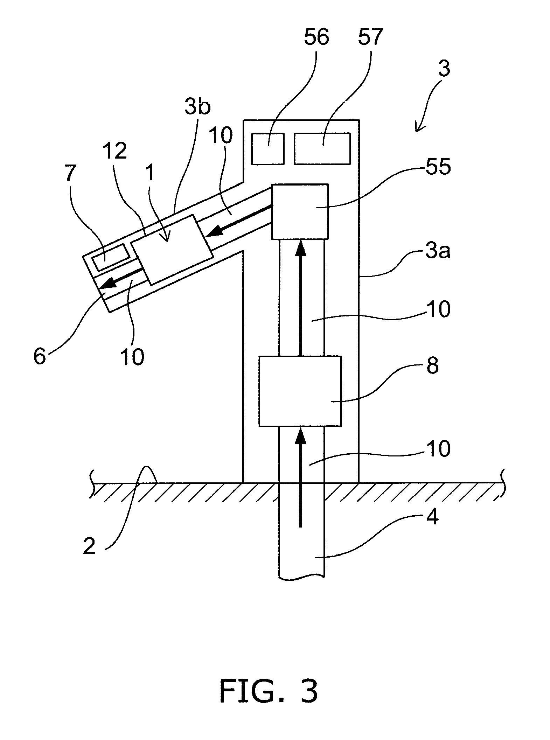

   FIG. 3 is a schematic sectional view for describing the automatic faucet device according to the embodiment of the invention.
[Fig 4]

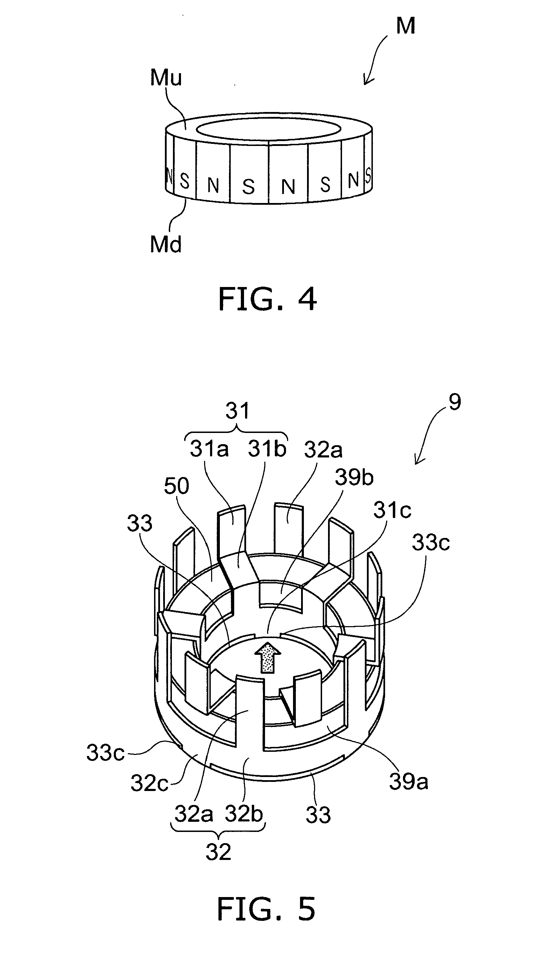

   FIG. 4 is a schematic perspective view for describing the magnet.
[Fig. 5]
   FIG. 5 is a schematic perspective view for describing the stator.
[Fig. 6]

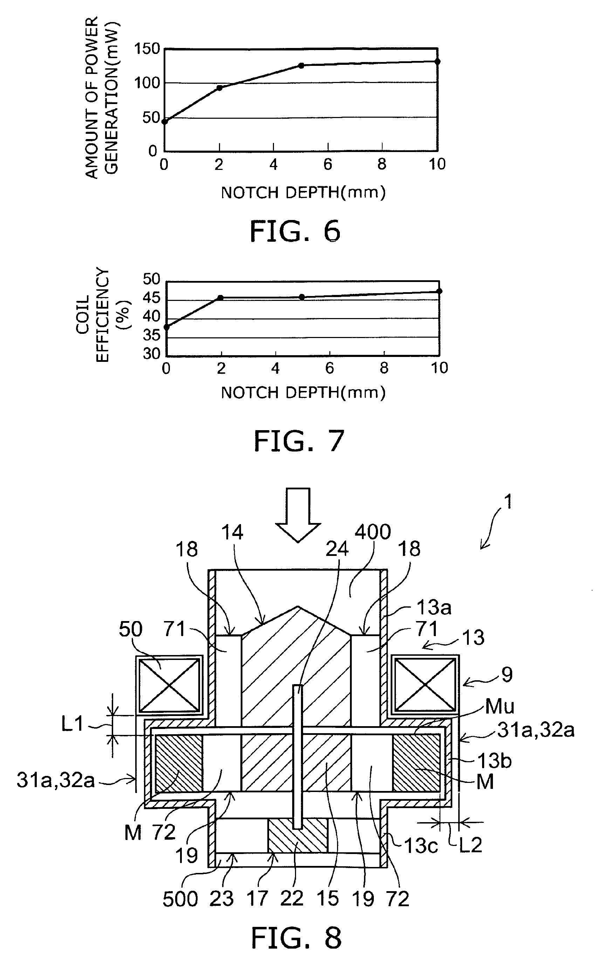

   FIG. 6 is a graph showing the relationship between the depth of the notches and the amount of power generation.
[Fig. 7]
   FIG. 7 is a graph showing the relationship between the depth of the notches and the coil efficiency
[Fig. 8]
   FIG. 8 is a schematic sectional view for describing a generator according to another embodiment of the invention.
[Fig. 9]

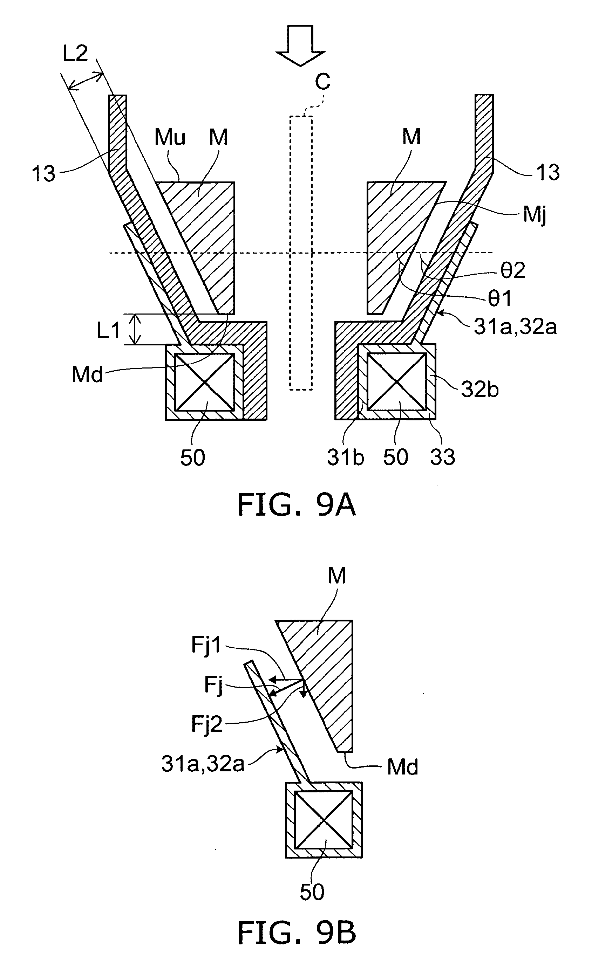

   FIGS. 9A and 9B are schematic sectional views for describing a generator according to another embodiment of the invention.
[Fig. 10]

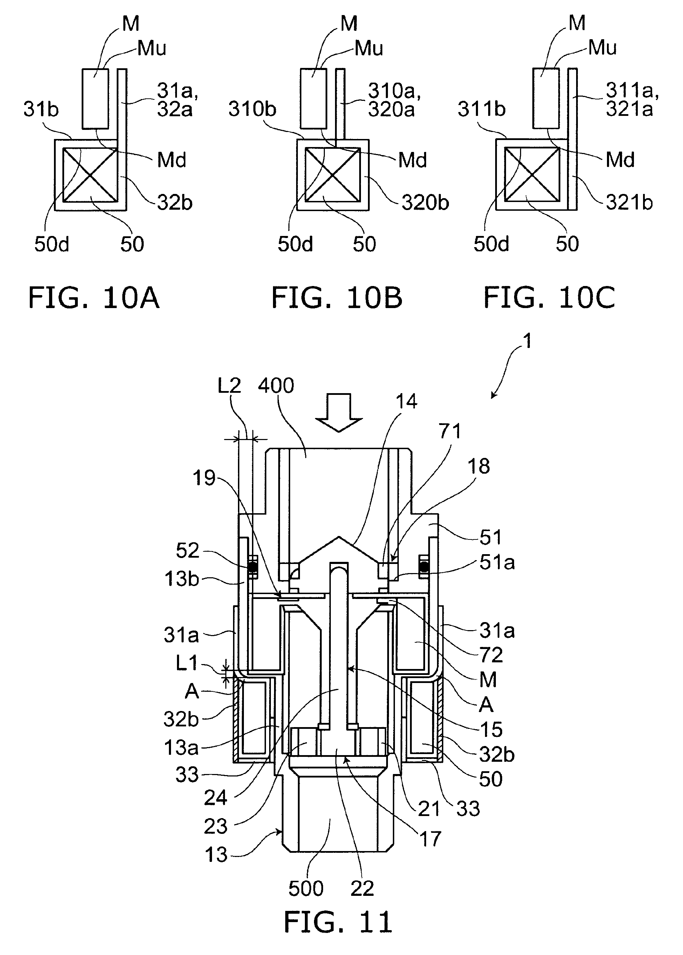

   FIGS. 10A to 10C are schematic sectional views for describing the positional relationship of inductors.
[Fig. 11]
   FIG. 11 is a schematic sectional view for describing a generator according to another embodiment of the invention.
[Fig.12]

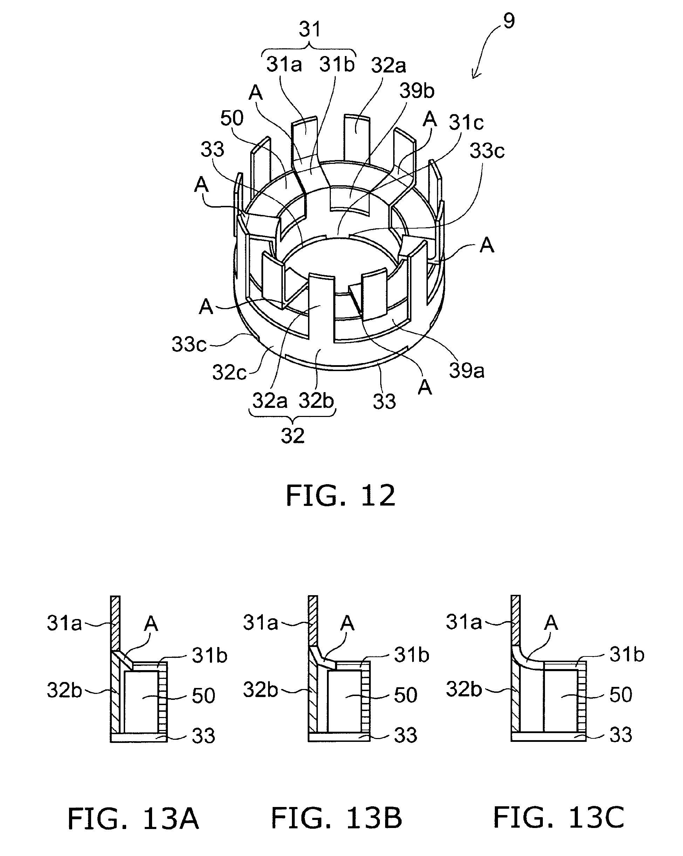

   FIG. 12 is a schematic sectional view for describing a stator according to another embodiment of the invention.
[Fig.13]
   FIGS. 13A, 13B, and 13C are schematic views for describing other configurations of the bend.
[Fig. 14]

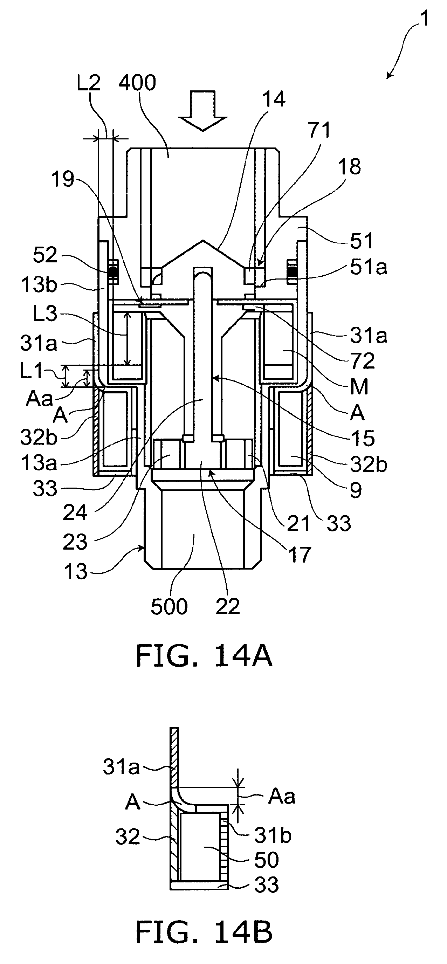

   FIG. 14A is a schematic sectional view for describing a generator according to another embodiment of the invention, and FIG. 14B is a schematic sectional view for describing a bend A according to another embodiment.
[Fig. 15]

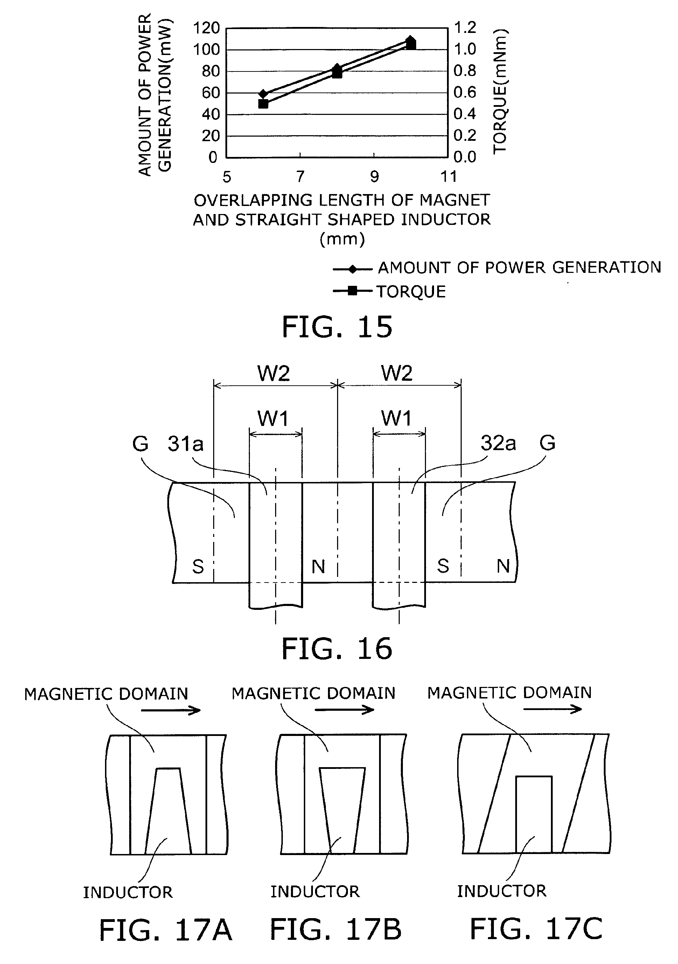

   FIG. 15 is a graph for describing the relationship between the overlapping length of the magnet and the straight shaped inductor, and the amount of power generation and the torque,
[Fig. 16]
   FIG. 16 is a schematic view for describing the relationship between the dimension of the inductor and the magnetic domain of the magnet.
[Fig. 17]
   FIGS. 17A to 17C are schematic views for describing the relationship between the shape of the inductor and the shape of the magnetic domain of the magnet.
[Fig.18]

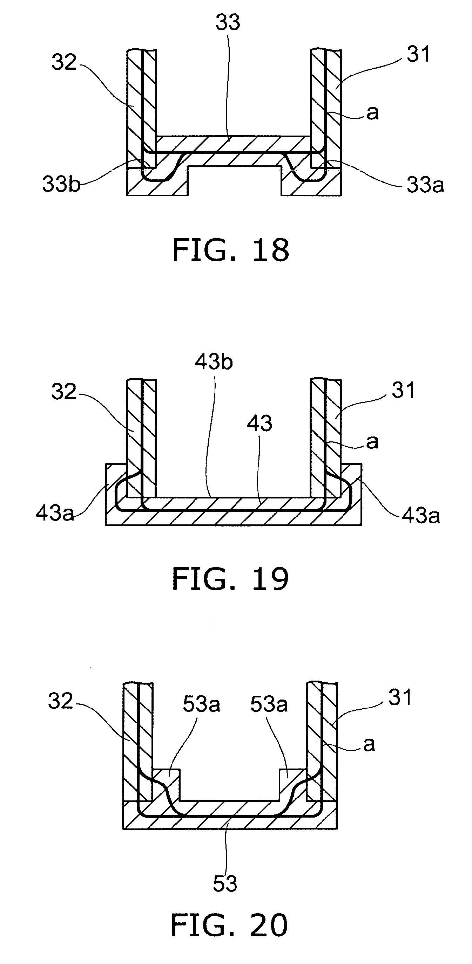

   FIG. 18 is a schematic view for describing the coupling portion of the first yoke, the second yoke, and the third yoke described above.
[Fig. 19]
   FIG. 19 is a schematic view for describing the coupling portion of the first yoke, the second yoke, and the third yoke described above.
[Fig. 20]
   FIG. 20 is a schematic view for describing the coupling portion of the first yoke, the second yoke, and the third yoke described above.
[Fig. 21]

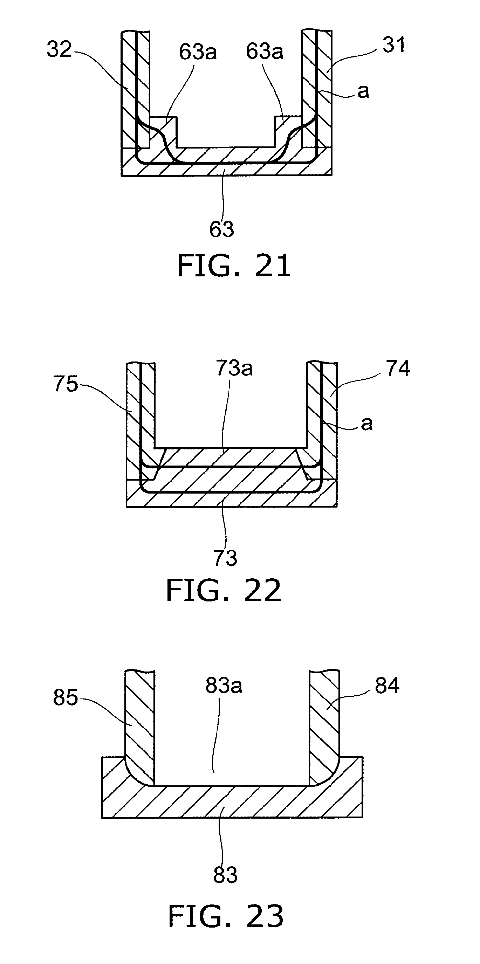

   FIG. 21 is a schematic view for describing the coupling portion of the first yoke, the second yoke, and the third yoke described above.
[Fig. 22]
   FIG. 22 is a schematic view for describing the coupling portion of the first yoke, the second yoke, and the third yoke described above.
[Fig. 23]
   FIG. 23 is a schematic view for describing the coupling portion of the first yoke, the second yoke, and the third yoke described above.
[Fig. 24]
   FIG. 24 is a schematic view for describing the coupling portion of the first yoke, the second yoke, and the third yoke described above. [Fig. 25]
FIG. 25 is a schematic sectional view for describing a generator according to still another embodiment of the invention.
[Fig. 26]

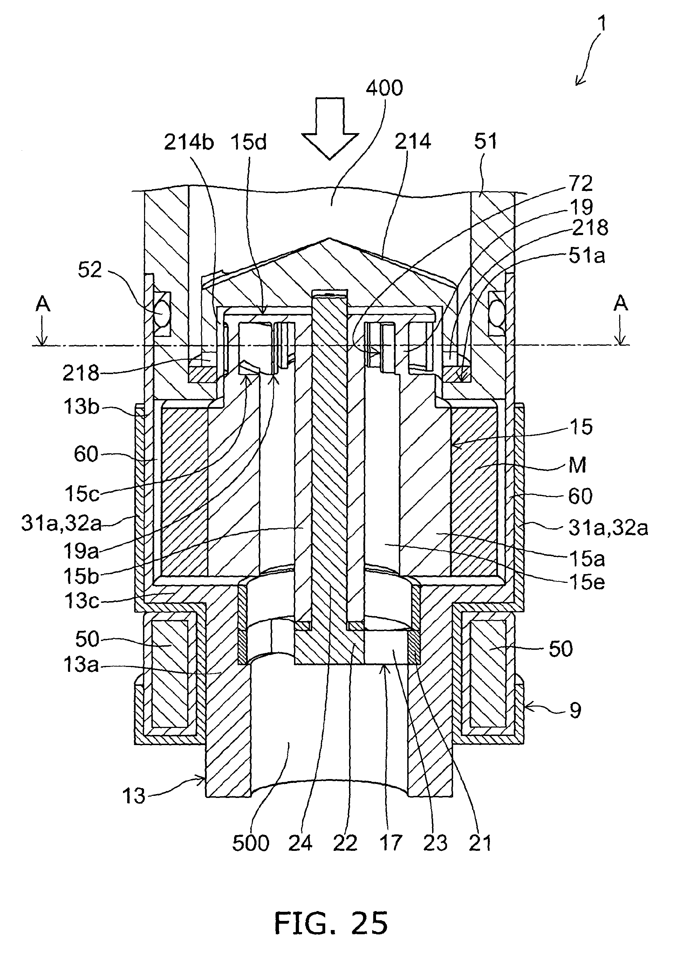

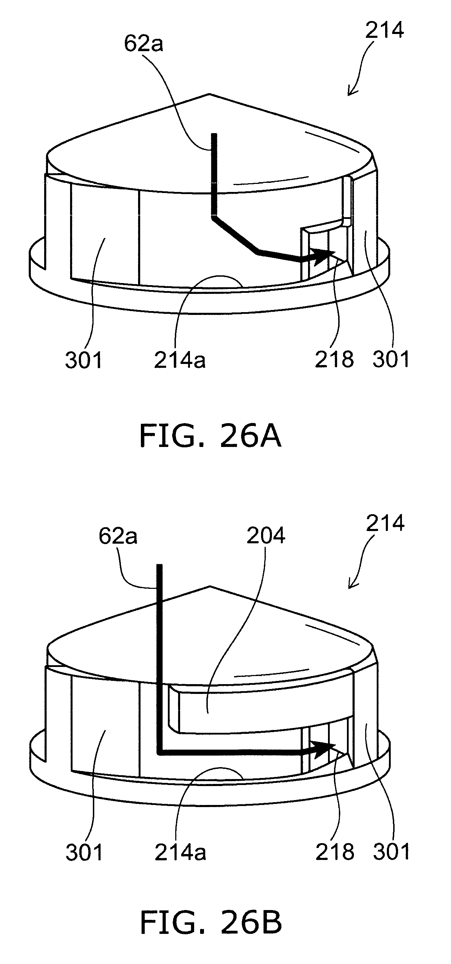

   FIGS. 26A and 26B are schematic perspective views for describing the cap 214 provided in the generator 1 shown in FIG. 25.
[Fig. 27]

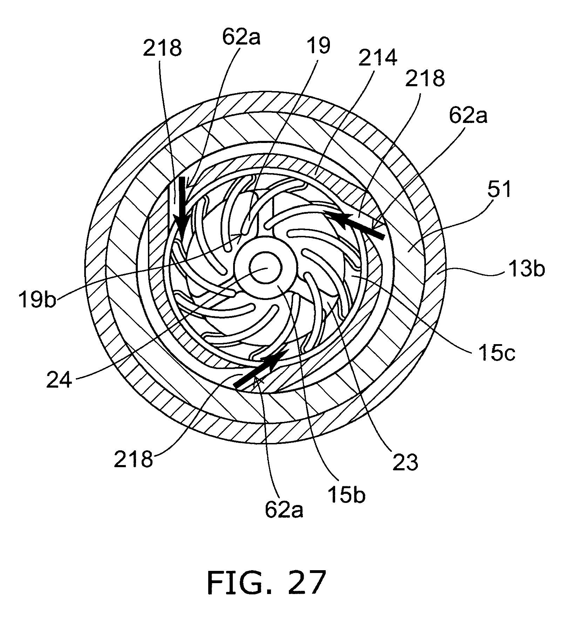

   FIG. 27 is a sectional view as viewed along arrows A-A in FIG. 25.

### [Explanation of Reference]

- 1: generator
- 2: washbasin
- 3: automatic faucet device
- 3a: main body
- 3b: water discharger
- 4: piping
- 5: inflow port
- 6: water discharge port
- 7: sensor
- 8: solenoid valve
- 9: stator
- 10: supply water flow channel
- 12: casing
- 13: enclosure
- 13a: small diameter portion
- 13b: large diameter portion
- 14: pre-swirl guide vane
- 15: bucket
- 15a: bucket ring
- 15b: ring peripheral surface
- 15c: ring upstream end surface
- 15d: slide ring
- 17: bearing
- 18: guide vane blade
- 19: bucket blade
- 21: ring member
- 22: shaft support portion
- 23: connecting member
- 24: center shaft
- 31: yoke
- 31a: inductor
- 31b: base
- 31c: positioning portion
- 32: yoke
- 32a: inductor
- 32b: base
- 32c: positioning portion
- 33: yoke
- 33a: inner peripheral side step portion
- 33b: outer peripheral side step portion
- 33c: positioning portion
- 39a: notch
- 39b: notch
- 43: yoke
- 43a: projected portion
- 43b: surface portion
- 50: coil
- 50d: end surface

- 51: sealing member
- 51a: step portion
- 52: O-ring
- 53: yoke
- 53a: protrusion
- 55: constant flow rate valve
- 56: charger
- 57: controller
- 63: yoke
- 63a: protrusion
- 64: yoke
- 64a: end portion
- 65: yoke
- 70: space
- 71: guide vane flow channel
- 72: bucket flow channel
- 73: yoke
- 73a: protrusion
- 74: yoke
- 75: yoke
- 83: yoke
- 83a: depression
- 84: yoke
- 85: yoke
- 90: stator
- 130: enclosure
- 131: yoke
- 132: yoke
- 132a: swaged portion
- 133: yoke
- M: magnet
- Mu: upstream end surface of magnet M
- Md: downstream end surface of magnet M
- A: bend
- Aa: bend size
- G: magnetic domain
- W1: dimension of inductor
- W2: dimension of magnetic domain G
- 204: obstacle
- 214: cap
- 214a: flange
- 214b: space portion
- 218: nozzle
- 310a: inductor
- 310b: base
- 311a: inductor
- 311b: base
- 320a: inductor
- 320b: base
- 321a: inductor
- 321b: base
- 400: supply water inflow port
- 500: supply water outflow port

### [Best Mode for Carrying Out the Invention]

In the embodiments of the invention, the force received by the bucket and the magnet due to water flow (hereinafter, water flow-induced load) is supported by a bearing. The application direction of this water flow-induced load is the "direction from the upstream side to the downstream side of the water supply flow channel". The "direction from the upstream side to the downstream side of the water supply flow channel" is the "direction generally parallel to the rotation center axis of the magnet". On the other hand, the acting direction of electromagnetic force due to magnetic interaction between the magnet and the inductor is the "direction crossing the plane perpendicular to the rotation center axis of the magnet", That is, the acting direction of electromagnetic force does not coincide with the application direction of the water flow-induced load. Hence, in the embodiments of the invention, there is no case where electromagnetic force fully acts on the bearing in addition to the water flow-induced load as in the conventional axial configuration. Thus, in the structure of the embodiments of the invention, the sliding surface of rotation is resistant to wear.

Here, with regard to the "direction crossing the plane perpendicular to the rotation center axis of the magnet", orthogonal crossing at 90 degrees is most preferable. However, crossing at 45 degrees or more is preferable. Crossing at 45 degrees can equally divide the action of electromagnetic force into the "direction generally parallel to the rotation center axis of the magnet" and the "direction generally parallel to the rotation center axis of the magnet". Thus, the electromagnetic force acting on the bearing can be sufficiently reduced, and the effect of suppressing the wear of the sliding surface of rotation can be achieved.

In the embodiments of the invention, the sliding surface of rotation is resistant to wear over a long period of time. Hence, the water supply flow channel formed between the magnet and the inductor is also maintained at a fixed distance. Thus, dust clogging and interference due to the vibration of the magnet are also less likely to occur, and high reliability can be maintained over a long period of time.

Furthermore, the embodiments are configured so that the acting direction of electromagnetic force does not completely coincide with the application direction of the water flow-induced load. This can suppress the change of the distance between the magnet and the inductor despite wear of the sliding surface of rotation. Consequently, a stable amount of power generation can be obtained over a long period of time

Embodiments of the invention will now be illustrated with reference to the drawings. In the drawings, like components are labeled with like reference numerals.

FIG. 1 is a schematic sectional view of a generator 1 according to an embodiment of the invention.
The generator 1 primarily includes a supply water inflow port 400, a supply water outflow port 500, an enclosure 13, a pre-swirl guide vane 14, a bucket 15, a magnet M, a coil 50, and a sealing member 51. These are housed in a casing 12 (see FIG. 3). The arrow depicted above the pre-swirl guide vane 14 indicates the direction of flowing water.

Here, before describing the generator 1, an automatic faucet device 3 equipped with the generator 1 is described.

FIG. 2 is a schematic view showing an installation example of an automatic faucet device equipped with the generator (hereinafter also simply referred to as automatic faucet device) according to the embodiment of the invention.
FIG. 3 is a schematic sectional view of the automatic faucet device 3 according to the embodiment of the invention.
   The automatic faucet device 3 is illustratively installed on a washbasin 2. The automatic faucet device 3 is connected to an inflow port 5 of tap water or the like through a piping 4. The automatic faucet device 3 includes a cylindrical main body 3a, and a water discharger 3b provided on the upper portion of this main body 3a and extending in the radially outward direction of the main body 3a. A water discharge port 6 is formed at the tip of the water discharger 3b. Furthermore, a sensor 7 is incorporated near this water discharge port 6.

The automatic faucet device 3 includes therein a supply water flow channel 10 for allowing supply water flowing in from the inflow port 5 through the piping 4 to be guided to the water discharge port 6. Inside the main body 3a, a solenoid valve 8 for opening/closing the supply water flow channel 10 is incorporated. Furthermore, on the downstream side of the solenoid valve 8, a constant flow rate valve 55 for limiting the amount of water discharge to a constant level is incorporated. Furthermore, a pressure reducing valve or pressure regulating valve (not shown) is incorporated on the upstream side of the solenoid valve 8. When the source pressure of tap water or the like is too higher than the operating pressure, the pressure reducing valve or pressure regulating valve reduces the pressure Here, the constant flow rate valve 55 and the pressure reducing/regulating valve can be provided as necessary.

The generator 1 is provided inside the water discharger 3b downstream of the constant flow rate valve 55. The main body 3a includes therein a charger 56 for charging electrical power generated by the generator 1, and a controller 57 for controlling the operation of the sensor 7 and the opening/closing of the solenoid valve 8. The generator 1 is disposed on the downstream side of the solenoid valve 8 and the constant flow rate valve 55. Hence, the source pressure (primary pressure) of tap water does not directly act on the generator 1. Thus, the generator 1 does not require very high pressure resistance. This configuration is advantageous in terms of reliability and cost.

The charger 56 is connected to the controller 57 through a wiring, not shown. The charger 56 and the controller 57 are located in the upper portion of the main body 3a and above the uppermost position of the supply water flow channel 10. Hence, even if water droplets condensed on the outer surface of the flow channel pipe forming the supply water flow channel 10 drop or fall along the flow channel pipe, the controller 57 can be prevented from wetting, and failure of the controller 57 can be prevented. Similarly, because the charger 56 is also provided above the supply water flow channel 10, the charger 56 can be prevented from wetting, and failure of the charger 56 can also be prevented.

The coil 50 (see FIG. 5) provided in the generator 1 is connected to the controller 57 through a wiring, not shown, so that the output of the coil 50 is sent to the charger 56 through the controller 57.

The faucet device according to the invention is suitably used in living space and public facilities. The intended use illustratively includes a kitchen faucet device, a faucet device for a living/dining room, a shower faucet device, a toilet faucet device, and a lavatory faucet device. Furthermore, this invention is not limited to the automatic faucet device 3 using a human body sensor. For instance, the invention is also applicable to a one-touch faucet device manually switched on/off, a metered discharge faucet device for metering the flow and stopping water at a fixed volume, and a timed faucet device for stopping water after the lapse of a preset time. Furthermore, the generated electrical power may be used for, e.g., illumination, generation of electrolyzed functional water such as alkaline ion water and silver ion-containing water, flow rate indication (measurement), temperature indication, and audio guidance.

In the faucet device according to the invention, the discharge flow rate is set to e.g. 100 liters/min or less, and preferably to 30 liters/min or less. In particular, in a lavatory faucet, the discharge flow rate is preferably set to 5 liters/min or less. For a relatively high discharge flow rate such as in a toilet faucet, preferably, the water flow to the generator 1 is branched from the water supply pipe to regulate the flow rate to the generator 1 to 30 liters/min or less. The reason for this is as follows. If all the water flow from the water supply pipe is passed to the generator 1, the number of revolutions of the bucket 15 becomes large. This causes concern about the potential increase of noise and shaft wear. Furthermore, even if the number of revolutions increases, unless it is equal to or less than the appropriate number of revolutions, eddy current and current flow in the coil generate Joule heat and result in energy loss. Thus, the amount of power generation does not increase. Furthermore, the supply water pressure of the water pipe to which the faucet device is attached may be as low as a water pressure of approximately 0.05 MPa in Japan, for instance.

Next, returning to FIG. 1, the generator 1 is described.
The enclosure 13 is formed like a cylinder and has a stepped shape including a small diameter portion 13a and a large diameter portion 13b. With the inside communicating with the water supply flow channel, the enclosure 13 is disposed in the water discharger 3b shown in FIGS. 2 and 3. Here, the enclosure 13 is disposed so that the center axis direction of the enclosure 13 is generally parallel to the direction of flowing water. Furthermore, the enclosure 13 is disposed so that the small diameter portion 13a is directed to the downstream side and the large diameter portion 13b is directed to the upstream side.

Sequentially from the upstream side, the enclosure 13 includes therein the pre-swirl guide vane 14, the bucket 15, and a bearing 17. The bearing 17 is provided inside the small diameter portion 13a, The pre-swirl guide vane 14 and the bucket 15 are provided inside the large diameter portion 13b.
The opening at the upstream end of the large diameter portion 13b is liquid-tightly sealed by the sealing member 51 via an O-ring 52. A stepped hole is provided inside the sealing member 51. Its stepped portion 51a is formed in a ring shape The pre-swirl guide vane 14 is supported on this stepped portion 51 a.

The pre-swirl guide vane 14 is shaped so that a conical body is integrally provided on one end surface (the surface located on the upstream side) of a cylindrical body. A plurality of guide vane blades 18 projected radially outward are provided on the peripheral surface of the pre-swirl guide vane 14. The guide vane blade 18 is twisted clockwise with respect to the axial center of the pre-swirl guide vane 14 and inclined from the upstream side to the downstream side. The space between adjacent guide vane blades 18 as viewed in the circumferential direction functions as a guide vane flow channel 71. The pre-swirl guide vane 14 is fixed to the enclosure 13 and does not rotate.

The bucket 15 is provided on the downstream side of the pre-swirl guide vane 14. The bucket 15 is shaped like a cylinder. A plurality of bucket blades 19 projected radially outward are provided on the peripheral surface of the bucket 15. The bucket blade 19 is twisted counterclockwise with respect to the axial center of the bucket 15, opposite to the guide vane blade 18, and inclined from the upstream side to the downstream side. The space between adjacent bucket blades 19 as viewed in the circumferential direction functions as a bucket flow channel 72.

A center shaft (rotation center shaft) 24 is provided so as to protrude from the bearing 17 to the upstream side. The center shaft 24 is integrated with the bearing 17. The bucket 15 is penetrated by the center shaft 24, and rotatable about the center shaft 24. Here, a slide ring 15d made of a material with good slidability can be provided on the bearing 17. Then, the bucket 15 smoothly rotates, and the loss of fluid energy can be prevented Alternatively, the bucket 15 may be integrated with the center shaft 24, and both end portions of the center shaft 24 may be supported by the pre-swirl guide vane 14 and the bearing 17 so as to allow the bucket 15 integrated with the center shaft 24 to rotate.

The bearing 17 includes a ring member 21 fixed to the inner peripheral surface of the enclosure 13, and a shaft support portion 22 provided at the center of this ring member 21. The ring member 21 is coupled to the shaft support portion 22 by radial connecting members 23. The space between the connecting members 23 is not occluded but opened. Hence, the flow of supply water inside the enclosure 13 is not blocked.

Inside the large diameter portion 13b of the enclosure 13, a bucket ring 15a fixed to the side end surface on the radial outside of the bucket blade 19, and an annular magnet M fixed to the outer peripheral portion of the bucket ring 15a are housed. Outside the small diameter portion 13a of the enclosure 13, the coil 50 is opposed to the magnet M on the downstream side of the supply water flow channel. The bucket ring 15a is not necessarily needed. However, by providing the bucket ring 15a, the bucket 15 can be integrated with the magnet M more robustly As shown in FIG. 1, the bucket ring 15a may be formed in an inverted L-shape in cross section and bonded to the magnet M at the ring upstream end surface 15b, which is the end surface on the upstream side of the supply water flow channel, in addition to the ring peripheral surface 15c. Alternatively, the bucket ring 15a may be formed in an L-shape in cross section and bonded to the magnet M at the end surface on the downstream side of the supply water flow channel, in addition to the peripheral surface 15c. Alternatively, the bucket ring 15a may be bonded to the magnet M at the ring peripheral surface 15c alone.

In this embodiment, the coil 50 is opposed to the downstream side of the magnet M. Hence, the radial dimension can be made smaller than in the case where the coil 50 is opposed to the radial outside of the magnet M. Furthermore, because the coil 50 is not located radially outside the bucket 15, the radial dimension of the bucket 15 can be enlarged to that extent, and the amount of power generation can be increased.
Furthermore, if the enclosure 13 is formed from a material having low electrical conductivity such as resin, eddy current loss can be made lower than in the case of being formed from metal. Hence, the amount of power generation can be further increased. In this case, it is also possible to form only the large diameter portion 13b traversed by magnetic flux from a material having low electrical conductivity such as resin.

Next, the magnet M and a stator 9 are described.
FIG. 4 is a schematic perspective view for describing the magnet M.
FIG. 5 is a schematic perspective view for describing the stator 9.

As shown in FIG. 4, the magnet M is alternately magnetized to N pole and S pole along the circumferential direction at the outer peripheral surface intersecting with the plane perpendicular to the rotation center axis of the magnet M (hereinafter, the outer peripheral surface of the magnet M). That is, the magnet M is magnetized at the outer peripheral surface intersecting with the plane perpendicular to the center shaft 24 of rotation, and not magnetized at the end surface Md opposed to the coil 50. Here, magnetic flux from N pole and S pole leaks, although slightly, also to the upstream end surface Mu and downstream end surface Md of the magnet M with respect to the water supply flow channel However, the amount of this leakage can be controlled by the magnetization method. Furthermore, even when magnetic flux leaks to the upstream end surface Mu and downstream end surface Md, if the amount of leakage is slight, the adverse effect due to magnetic coupling to the coil 50 does not substantially occur. Here, the magnet M may be formed by magnetizing a single component formed in a cylindrical shape. Alternatively, a plurality of tile-shaped components may be each magnetized and then bonded to form a cylindrical shape. In the former case, the number of manufacturing steps can be reduced. In the latter case, the magnetic circuit for magnetization can be simplified.

The stator 9 includes yokes 31, 32, 33, and the coil 50 housed in the space surrounded by these yokes 31, 32, 33. The coil 50 is wound in a cylindrical shape, and its inner peripheral surface portion, outer peripheral surface portion, and both end surface portions are surrounded by the yokes 31, 32, 33, each made of a magnetic material. The yoke 31 includes a base 31b surrounding the inner peripheral surface portion and the upper end surface portion of the coil 50, and a plurality of inductors 31a extending out from the base 31b and spaced from each other. The yoke 32 includes a base 32b surrounding the outer peripheral surface portion of the coil 50, and a plurality of inductors 32a extending out from the base 32b and spaced from each other. That is, the base 31b is part of the yoke 31 other than the inductors 31a. The base 32b is part of the yoke 32 other than the inductors 32a.

The first yoke 31 has a generally cylindrical shape and is arranged so as to surround the inner peripheral surface portion of the coil 50. At one axial end of the first yoke 31, the plurality of inductors 31a are integrally provided to extend in the axial direction. The inductors 31a are equidistantly arranged along the circumferential direction of the coil 50.
The second yoke 32 has a generally cylindrical shape and is arranged so as to surround the outer peripheral surface portion of the coil 50. At one axial end of the second yoke 32, the plurality of inductors 32a are integrally provided to extend in the axial direction. The inductors 32a are equidistantly arranged along the circumferential direction of the coil 50, and located between the inductors 31a of the first yoke 31. That is, the inductors 31a of the first yoke 31 and the inductors 32a of the second yoke 32 are alternately arranged and spaced from each other along the circumferential direction of the coil 50. Furthermore, the inductors 31a and inductors 32a are provided immediately above the portion surrounding the outer peripheral surface portion of the coil 50 (the base 32b of the second yoke 32). The distances from the center of the coil 50 to the inductors 31a and inductors 32a are generally equal.

In this embodiment, the inductors 31a, 32a are provided outside the enclosure 13. Furthermore, the inner peripheral surface of the inductors 31a, 32a is opposed to the outer peripheral surface, or magnetized surface, of the magnet M. Thus, the magnetic flux from the outer peripheral surface of the magnet M is guided through the inductors 31a, 32a to the coil 50. In response to the rotation of the magnet M, the direction of the magnetic flux is changed to generate electrical power. Hence, the distance from the outer peripheral surface of the magnet M to the inductors 31a, 32a (L2 in FIG. 1) significantly affects the amount of magnetic flux guided to the coil 50, and also significantly affects the amount of power generation.

Here, in this embodiment, the acting direction of the water flow-induced load is the "direction from the upstream side to the downstream side of the water supply flow channel", and generally parallel to the center shaft 24 in FIG. 1. On the other hand, the acting direction of electromagnetic force is generally perpendicular to the center shaft 24 in FIG. 1. Hence, in FIG. 1, the bearing 17 is subjected to the water flow-induced load, but not subjected to the action of electromagnetic force irrespective of the installation direction. Thus, in the case as shown in FIG. 1 where the bucket 15 penetrated by the center shaft 24 rotates and the slide ring 15d is provided on the sliding surface of the bucket 15, the wear of the slide ring 15d can be suppressed.

In the case where the bucket 15 integrated with the center shaft 24 rotates, the wear of the sliding surface of rotation of the center shaft 24 can be suppressed. Consequently, the distance between the downstream end surface Md of the magnet M and the base 31 b opposed thereto (L1 in FIG. 1) is less likely to narrow over time. That is, the width of the flow channel formed between the downstream end surface Md of the magnet M and the base 31b is also less likely to change. Hence, over a long period of time, dust clogging can be prevented, and the magnet can be prevented from vibrating due to water flow and interfering with the inner wall of the enclosure 13. Thus, a faucet generator with high reliability is realized.

Furthermore, the distance from the outer peripheral surface of the magnet M to the inductors 31a, 32a (L2 in FIG. 1) is not affected by the action of water flow. Hence, the distance does not change over a long period of time. Thus, while achieving downsizing in the radial direction by the "axial configuration", variation in the amount of power generation over time can be suppressed.

Moreover, according to this embodiment, the end surface Md of the magnet M is not magnetized. Thus, magnetic coupling to the coil 50 opposed to the end surface Md can be suppressed. That is, power generation by magnetic flux emanating from the end surface Md can be suppressed. Consequently, even if the distance between the magnet M and the coil 50 is changed by a long period of use, variation in the amount of power generation in the coil 50 can be prevented That is, stable output of power generation can be obtained over a long period of time.

In this example, the coil 50 is opposed to the downstream end surface Md of the magnet M Thus, by placing the coil 50 on the downstream side of the magnet M i.e., on the opposite side from the pre-swirl guide vane 14, the pre-swirl guide vane 14 is less restricted in shape and size. Enlarging the size of the pre-swirl guide vane 14 makes it possible to form a swirling flow effective for rotation of the bucket 15 while suppressing pressure loss.

The third yoke 33 is shaped like a ring plate and opposed to the lower end surface portion of the coil 50. Furthermore, part of the outer peripheral side of the third yoke 33 is notched to form an extracting portion of the coil wiring, not shown.
The third yoke 33 is coupled to the end portion of the first yoke 31 and the second yoke 32 on the opposite side from the end portion provided with the inductors 31a, 32a, respectively. The coil 50 is housed in the space surrounded by the first to third yoke 31-33 so that the wiring from the coil 50 is drawn out from the extracting portion of the coil wiring, not shown, formed on the outer peripheral side of the third yoke 33. Thus, the wiring of the coil 50 is extracted outside from the outer peripheral side through the extracting portion of the coil wiring, not shown, formed on the outer peripheral side of the third yoke 33. Hence, wiring routing to the controller 57 is easier than in the case of extraction from the inner peripheral side.

The third yoke 33 further includes a depression-like positioning portion 33c. This positioning portion is engaged with a protrusion-like positioning portion 31c formed on the first yoke 31 and a protrusion-like positioning portion 32c formed on the second yoke 32. In FIG. 5, the positioning portions 33c, 32c of the third yoke 33 and the second yoke 32, respectively, are engaged with each other on the outer peripheral side of the coil 50, and the positioning portions 33c, 31c of the third yoke 33 and the first yoke 31, respectively, are engaged with each other on the inner peripheral side of the coil 50. Thus, the first yoke 31 and the second yoke 32 are each positioned at a prescribed position in the circumferential direction, so that the pitch accuracy between the inductors 31 a, 32a can be improved. Here, alternatively, the third yoke 33 can be provided with a protrusion-like positioning portion, and the first yoke 31 and the second yoke 32 can be each provided with a depression-like positioning portion.

Furthermore, the second yoke 32 includes a notch 39a, and the third yoke 33 includes a notch 39b. Thus, in the portion of each yoke 31, 32 surrounding the peripheral surface portion of the coil, notches 39a, 39b are discontinuously provided by notching the portion between the adjacent inductors from one end side provided with the inductors 31a, 32a, so that the yokes 31, 32 are magnetically insulated from each other in the circumferential direction. In the magnetic path formed along the peripheral surface of each yoke 31, 32, the portion unnecessary for power generation is thus cut off. Hence, the short circuit of the magnetic path and the iron loss can be suppressed, and the amount of power generation can be increased. In other words, the notching direction and shape of the notches 39a, 39b can be configured to achieve the effect of aligning the direction of magnetic flux, and hence a magnetic path effective for power generation can be formed. In the case of this embodiment, the direction of the notch is coaxial with the coil 50, and is effective in aligning the direction of magnetic flux to the direction of the arrow in FIG. 5. As in this embodiment, by aligning the direction of magnetic flux to the direction coaxial with the coil 50, the effect of increasing the amount of power generation is further enhanced.

Here, the effect of the notches 39a, 39b is described.
FIG. 6 is a graph showing the relationship between the depth of the notches 39a, 39b and the amount of power generation.
The horizontal axis represents the depth (mm) of the notches 39a, 39b, and the vertical axis represents the amount of power generation (mW).

FIG. 7 is a graph showing the relationship between the depth of the notches 39a, 39b and the coil efficiency. The horizontal axis represents the depth (mm) of the notches 39a, 39b, and the vertical axis represents the coil efficiency (%).

The amount of power generation and the coil efficiency were simulated while varying the depth of the notches 39a, 39b (axial length from the upper end surface of the coil 50) as 0 mm, 2 mm, 5 mm, and 10 mm. Here, the coil efficiency is the ratio (%) of output (amount of power generation) to input (torque required to rotate the magnet M x number of revolutions). The overall axial dimension of the stator 9 was set to 27 mm. The depth of the notches 39a, 39b being 0 mm means that no notches 39a, 39b are provided.

As seen in FIG. 6, the amount of power generation can be increased by increasing the depth of the notches 39a, 39b. Furthermore, as seen in FIG. 7, the coil efficiency can also be increased by increasing the depth of the notches 39a, 39b.

In the case of the automatic faucet equipped with a generator, the generator needs to be downsized because a solenoid valve and the generator are incorporated in the automatic faucet. In order to ensure a prescribed amount of power generation despite downsizing of the generator, it is also necessary to increase the coil efficiency. Thus, providing notches is highly effective, Furthermore, also in order to prevent efficiency decrease due to heat generation, it is preferable to provide notches. Furthermore, a faucet generator needs to prevent iron powder in water from being adsorbed on the magnet, and a strong magnet cannot be used. Hence, the notch for efficiently forming the magnetic path is very effective. In particular, among faucet generators, in those for lavatory faucets, there is demand for the water saving effect, and hydraulic energy available for power generation is relatively low. In such faucet generators, the notch is more effective.

The notches 39a, 39b may be formed throughout the axial direction However, in this case, each yoke 31, 32 is divided into parts corresponding to the number of inductors. Hence, in view of the number of components and assemblability, it is more preferable to limit the depth of the notches 39a, 39b to halfway through the axial direction so that each yoke 31, 32 is not fragmented.

Next, the operation of the automatic faucet device 3 and the generator 1 is described.
In the automatic faucet device 3 and the generator 1 configured as described above, when a user stretches out a hand below the water discharge port 6, the sensor 7 senses it. Then, the controller 57 opens the solenoid valve 8 and allows the supply water flow channel 10 to communicate Thus, flowing water is supplied into the enclosure 13 of the generator 1. The water passed inside the enclosure 13 is discharged from the water discharge port 6. When the user moves the hand away from below the water discharge port 6, the solenoid valve 8 is closed, and the water automatically stops.

The flowing water poured into the enclosure 13 flows on the conical surface of the pre-swirl guide vane 14 and is spread radially outward. In this example, the water forms a swirling flow swirling clockwise with respect to the axial center, and flows in the guide vane flow channel 71 between the guide vane blades 18.

The swirling flow passed through the guide vane flow channel 71 flows into the bucket flow channel 72 and impinges on the upper inclined surface of the bucket blade 19. In this example, the swirling flow flowing into the bucket flow channel 72 is a flow swirling clockwise with respect to the axial center. Hence, a rightward force acts on the bucket blade 19, and the bucket 15 rotates clockwise. The flowing water passed through the bucket flow channel 72 inside the inner peripheral surface of the magnet M passes inside the bearing 17, travels through the inside of the enclosure 13, and reaches the water discharge port 6.

When the bucket 15 rotates, the magnet M fixed thereto also rotates. The outer peripheral surface (radial surface) of the magnet M is alternately magnetized to N pole and S pole along the circumferential direction as described above. Hence, when the magnet M rotates, the polarity of the inductors 31a, 32a and the first yoke 31 and second yoke 32 integrated therewith opposed to the outer peripheral surface (radial surface) of the magnet M is varied. This varies the direction of interlinkage magnetic flux in the coil 50 and generates electromotive force in the coil 50, thereby generating electrical power The generated power is sent to the charger 56 and charged therein Then, for instance, the power is used to drive the solenoid valve 8, the sensor 7, and the controller 57.

Next, another embodiment of the invention is described.
FIG. 8 is nearly identical to FIG. 1. The same portions as those in FIG. 1 are labeled with like reference numerals, and the description thereof is omitted. The generator 1 of this embodiment is characterized in that the coil 50 is opposed to the upstream end surface Mu of the magnet M. In this invention, part of the inductors 31 a, 32a (the portion of the inductors 31 a, 32a located in the region of L1 in FIG. 8) is located on the upstream side relative to the magnet M. Furthermore, also in this embodiment, the magnet M is magnetized at the outer peripheral surface intersecting with the plane perpendicular to the center shaft 24 of rotation, and not magnetized at the end surface Mu opposed to the coil 50.
Thus, like the generator described above with reference to FIG. 1, stable output of power generation can be obtained over a long period of time. That is, because the end surface Mu is not magnetized, power generation by magnetic flux emanating from the end surface Mu can be suppressed. Consequently, even if the distance between the magnet M and the coil 50 is changed by a long period of use, variation in the output of power generation can be prevented.

Next, another embodiment of the invention is described. FIGS. 9A and 9B are schematic sectional views for showing a variation regarding the layout of the magnet M and the inductors 31a, 32a The same portions as those in FIG. 1 are labeled with like reference numerals, and the description thereof is omitted.

In this example, as shown in FIG. 9A, the magnet M is shaped like not a cylinder, but a truncated cone. Furthermore, the outer peripheral surface Mj intersecting with the plane perpendicular to the rotation center shaft C is magnetized, and the end surface Md opposed to the coil 50 is not magnetized. In the invention, the magnet M does not necessarily need to be shaped like a cylinder, but can be shaped like a truncated cone as in this example. Then, while suppressing the height of the magnet M, the surface area of the outer peripheral surface Mj can be ensured, and the amount of power generation can be increased.

Returning to the description of FIG. 9A, the angle formed between the plane perpendicular to the rotation center shaft C and the outer peripheral surface Mj is denoted by θ1. The coil 50 is opposed to the downstream end surface Md of the magnet M. The enclosure 13 has a wall surface formed at angle θ2 with respect to the plane perpendicular to the rotation center shaft C. The inductors 31a, 32a are disposed outside this wall surface. In this embodiment, θ1 is equal to θ2. Thus, the distance L2 from the outer peripheral surface Mj of the magnet M to the inductors 31 a, 32a is equal in the portion where they are opposed to each other.
Next, the action of electromagnetic force is described with reference to FIG. 9B. Here, the electromagnetic force acting between the magnet M and the inductors 31 a, 32a is denoted by Fj. The horizontal component of Fj is denoted by Fj1, and the vertical component of Fj is denoted by Fj2. Then, Fj2 is the electromagnetic force acting on the bearing 17, not shown In this example, the acting direction of the electromagnetic force Fj is horizontally directed. Thus, the action of electromagnetic force acting on the bearing 17 is reduced, and the load on the bearing 17 is lightened. In the invention, if θ1 and θ2 are set to 45 degrees or more, the electromagnetic force Fj can be directed toward the horizontal component Fj1, and the load on the bearing 17 can be sufficiently lightened.

Next, another embodiment of the invention is described.
FIGS. 10A to 10C are schematic sectional views for describing the positional relationship of inductors.
As shown in FIGS. 10A to 10C, the end surface 50d of the coil 50 is opposed to the downstream end surface Md of the magnet M. The outer peripheral surface of the magnet M is opposed to the inductors 31a, 32a, 310a, 320a, 311a, 321a. Furthermore, a base 31b, 310b, 311b is provided between the end surface 50d of the coil 50 and the downstream end surface Md of the magnet M.
In the specific example shown in FIG. 10A, on the outer peripheral side of the coil 50 (far side from the center shaft 24), the inductors 31a, 32a extends out from the base 31b, 32b. In the specific example shown in FIG. 10B, at an intermediate position between the outer peripheral side and the inner peripheral side of the coil 50, the inductor 310a, 320a extends out from the base 310b, 320b. On the other hand, in the example shown in FIG. 10C, a base 311b surrounding the coil 50 is provided, and a member with a base 321b and an inductor 311a, 321a integrally formed therein is attached to the outer peripheral side of the base 311b. That is, a first member constituting the base 311b is combined with a second member constituting the base 321b and the inductor 321a.

In this specification, the inductor "extending out" from the base includes any configuration in the embodiments shown in FIGS. 10A to 10C. Any of the inductors 31a, 32a, 310a, 320a, 311a, 321a "extends out" from the respective bases 31b, 32b, 310b, 320b, 311b, 321b. As seen in these figures, the radial position of the inductor provided at a position opposed to the outer peripheral surface of the magnet M can be selected as appropriate between the outer peripheral surface and the inner peripheral surface of the coil 50.

Even in such cases, preferably, the downstream end surface Md of the magnet M is located immediately above the end surface 50d of the coil 50. In particular, the position as shown in FIG. 10A (the position in the example illustrated in FIG. 1) has the advantage of facilitating the manufacturing of yokes including the formation of inductors. Furthermore, relative to the overall diameter of the generator, the diameter of the magnet can be maximized. Hence, the surface area of the magnet increases, and the amount of surface magnetic flux can be increased. Furthermore, because the circumferential velocity increases, the rate of change of magnetic flux also increases. Hence, the amount of power generation can be increased.

The position of the end surface (tip) of the inductor provided at a position opposed to the outer peripheral surface of the magnet M only needs to be located at least above the downstream end surface Md of the magnet M on the coil 50 side. However, in view of the amount of power generation, the end surface (tip) of the inductor preferably extends to the neighborhood of the upstream end surface Mu of the magnet M on the opposite side from the coil 50. Typically, the upstream end surface Mu of the magnet M on the opposite side from the coil 50 is made generally identical to the position of the end surface (tip) of the inductor.

Also in this embodiment, the magnet M is magnetized at the outer peripheral surface, and not magnetized at the end surface Md. Thus, even if the distance between the magnet M and the coil 50 is changed, variation in the amount of power generation can be prevented.
This example has been illustrated in the case where the coil 50 is located on the downstream end surface Md of the magnet M. However, a similar design is made in the case where the coil 50 is opposed to the upstream end surface Mu of the magnet M.

Next, another embodiment of the invention is described.
FIG. 11 is nearly identical to FIG. 1. The same portions as those in FIG. 1 are labeled with like reference numerals, and the description thereof is omitted. The generator 1 of this example is characterized in that the yoke 31 has a bend A at the portion connecting the inductor 31a to the base 31b. Here, in the case of manufacturing a bend-shaped yoke like the first yoke 31, the yoke is not bent completely at right angle, but provided with a bend having a certain curvature. This improves the durability of the yoke
The yoke is subjected to the action of electromagnetic force during power generation. Hence, stress concentration may occur depending on the shape. As in this example, a bend provided in the bend shape relaxes the stress concentration and improves the durability of the yoke. In particular, as in this embodiment, in the case where the inductor 31a is relatively long as compared with the total length of the stator 9, the effect of the bend for suppressing stress concentration is further enhanced.

FIG. 12 is a schematic perspective view for describing the bend A in detail. FIG. 12 is is nearly identical to FIG. 5. The same portions as those in FIG. 5 are labeled with like reference numerals, and the description thereof is omitted. In FIG. 11, a bend shape exists at the portion connecting the inductor 31a to the base 31b, and a bend A is provided at this portion.

FIGS. 13A, 13B, and 13C are schematic views for describing other configurations of the bend. The inductor 31 a, the base 31b, the bend A connecting therebetween, the base 32b, the yoke 33, and the coil 50 are shown. As shown in FIG. 13A, the bend A may be shaped like a plate without having a curved surface. As shown in FIG. 13B, the bend A may be formed from a plurality of bends. As shown in FIG. 13C, the bend A may be formed from a position not completely overlapping the coil 50.

Depending on the characteristics of the material, the magnetic material used for the yoke may be subjected to strain around the bend when the bend shape is made by press working. In this case, the magnetic characteristics are degraded at the bend, and the passage of magnetic flux therethrough becomes difficult. Thus, another embodiment effective for this problem is described
FIG. 14A is nearly identical to FIG. 11. The same portions as those in FIG. 11 are labeled with like reference numerals, and the description thereof is omitted. The generator 1 of this example is characterized in that the yoke 31 has a bend A at the portion connecting the inductor 31 a to the base 31 b, and particularly in that the magnet M is not opposed to the bend A. To specifically describe this, FIG. 14B shows the bend A in detail As shown in FIG. 14B, the bend A is provided at the portion connecting the inductor 31a to the base 31b. Here, the bend size Aa is defined as the distance from the upper end surface of the base 31b to the lower end surface of the inductor 31a. The magnet M not being opposed to the bend A means that the relation L1≥Aa is satisfied for the distance L1 between the downstream end surface of the magnet M and the base 31b opposed thereto (FIG 14A) and the bend size Aa of the bend A (FIG. 14B). Specifically, it is preferable that the bend size Aa of the bend A be approximately 0.2-0.8 mm. On the other hand, preferably, L1 is set to approximately 1 mm or more.

Thus, the outer peripheral surface of the magnet M is opposed to the straight shaped inductors 31a, 32a subjected to low magnetic strain, and not opposed to the round portion subjected to high magnetic strain. Hence, whatever material is used to manufacture the yoke, a stable amount of magnetic flux can always be guided to the coil 50, and a stable amount of power generation can be obtained

FIG. 15 is a graph for describing the relationship between the opposed length (L3 in FIG. 13) of the magnet M and the straight shaped inductor, and the amount of power generation and the torque. A longer opposed length means that the magnet M and the inductor have a longer shape in the axial direction. It is seen that with the increase of this opposed length, both the amount of power generation and the torque increase in proportion.

Thus, the magnet M is not opposed to the bend A subjected to high magnetic strain, but opposed to the straight shaped inductor subjected to low magnetic strain. Then, in addition to good stability, the amount of power generation and the torque can be controlled in proportion to the overlapping length and the opposed area. This provides a structure with design flexibility.

Specifically, by adjusting the overlapping length of the magnet M and the straight portion of the inductor, a generator suitable for its type of use can be easily designed. For instance, in the case of a large amount of water and hence a large torque, and requiring a large amount of power generation, the overlapping length of the magnet M and the straight portion of the inductor can be made long. In the case of a small amount of water and hence a small torque, but requiring only a small amount of power generation, the overlapping length of the magnet M and the straight portion of the inductor can be made short. For instance, examples of the former can include a generator installed on a bathtub faucet. Examples of the latter can include a generator installed on a lavatory faucet.

FIG. 16 is a schematic view for describing the relationship between the dimension of the inductor and the magnetic domain of the magnet. The relationship between the inductors 31 a, 32a and the magnetic domain G of the magnet is preferably configured as shown in FIG. 16. That is, when the center of the magnetic domain G of the magnet M is opposed to the center of the inductors 31 a, 32a, the region of one of them preferably includes the other without including the adjacent portion of the other. More specifically, in the example shown in FIG. 16, the region of the magnetic domain G opposed to the inductor 31a includes the inductor 31a without including the inductor 32a adjacent to the inductor 31a. This also applies to the magnetic domain G opposed to the inductor 32a. The term "center of the inductor" used herein refers to the barycenter of the inductor. Thus, one inductor is magnetized only to one polarity (e.g., S pole), and the other adjacent inductor is magnetized only to the other polarity (e.g., N pole). Hence, a desired interlinkage magnetic path contributing to the power generation of the coil 5 can be sufficiently obtained Consequently, the rate of change of magnetic flux in response to the change of magnetic poles increases, and the amount of power generation increases.

Here, FIG. 16 illustrates the case where the region of the magnetic domain G includes an inductor without including the portion of the other adjacent inductors (the case where the dimension W2 of the magnetic domain G of the magnet M is larger than the dimension W1 of the inductor). Alternatively, the configuration may be such that the region of the inductor includes a magnetic domain G without including the portion of the other adjacent magnetic domains G (the dimension W1 of the inductor is larger than the dimension W2 of the magnetic domain G of the magnet M). However, if the region of the magnetic domain G includes an inductor (if the dimension W2 of the magnetic domain G is made larger than the dimension W1 of the inductor), the surface magnetic flux density of the magnet M can be increased, and hence the amount of power generation can be increased. Furthermore, in view of the amount of power generation, it is preferable to satisfy approximately W1:W2 = 1:2.

FIGS. 17A to 17C are schematic views for describing the relationship between the shape of the inductor and the shape of the magnetic domain of the magnet. FIGS. 17A and 17B show the cases where the end surface of the inductor generally orthogonal to the rotation direction of the magnet M is inclined. FIG. 17C shows the case where the boundary of the magnetic domain generally orthogonal to the rotation direction of the magnet M is inclined. The arrow in the figures indicates the rotation direction of the magnet M.

As shown, preferably, the area of the region where the magnetic domain of the magnet M is opposed to the inductor is gradually increased or decreased in response to the rotation of the magnet M. This can suppress abrupt change of the attractive and repulsive force acting between the magnet and the yoke. Hence, the magnet can be smoothly rotated while suppressing cogging. Consequently, shaft wear and torque loss can be suppressed, and the amount of power generation can be increased. Here, FIGS. 17A to 17C illustrate the cases where each shape is linearly varied. However, the shape is not limited thereto, but can also be an arbitrary curve, or a combination of curved and straight lines

FIGS. 18 to 24 are schematic views for describing the coupling portion of the first yoke 31, the second yoke 32, and the third yoke 33 described above. Here, "a" in the figures indicates the flow of magnetic flux formed in the first yoke, the second yoke, and the third yoke coupled thereto.
If a gap occurs between the yokes forming the flow of magnetic flux interlinking the coil 50, loss of magnetic flux occurs, and the amount of power generation decreases. Thus, preferably, the yoke members are caused to abut each other at a plurality of surfaces. Then, even if a gap occurs between some surfaces at the time of assembly, the magnetic path can be ensured through other surfaces, and the decrease of the amount of power generation can be suppressed.

In the example illustrated in FIG. 18, the end portion of the first yoke 31 is engaged with the inner peripheral side step portion 33a of the third yoke 33. Thus, the first yoke 31 and the third yoke 33 abut each other at a plurality of surfaces (in this example, e.g., two generally vertical surfaces) formed in a generally ring shape along the circumferential direction of the coil 50. The end surface of the first yoke 31 (in FIG. 18, the lower end surface) abuts the flange-like surface of the inner peripheral side step portion 33a of the third yoke 33 protruding to the coil center direction. The side surface (the surface generally perpendicular to the aforementioned end surface) of the end portion of the first yoke 31 on the outer peripheral side (opposite to the coil center direction) abuts the side surface of the inner peripheral side step portion 33a of the third yoke 33 generally perpendicular to the aforementioned flange-like surface.

Similarly, the end portion of the second yoke 32 is engaged with the outer peripheral side step portion 33b of the third yoke 33. Thus, the second yoke 32 and the third yoke 33 abut each other at a plurality of surfaces (in this specific example, e.g., two generally vertical surfaces). The end surface of the second yoke 32 (in FIG. 18, the lower end surface) abuts the flange-like surface of the outer peripheral side step portion 33b of the third yoke 33 protruding opposite to the coil center direction. The side surface (the surface generally perpendicular to the aforementioned end surface) of the end portion of the second yoke 32 facing the coil center direction abuts the side surface of the outer peripheral side step portion 33b of the third yoke 33 generally perpendicular to the aforementioned flange-like surface.

In the example illustrated in FIG. 19, the inner peripheral side edge portion and the outer peripheral side edge portion of the third yoke 43 are projected relative to the other portion. Each end portion of the first yoke 31 and the second yoke 32 is caused to abut the two generally perpendicular surfaces formed by the projected portion 43a and the surface portion 43b of the third yoke 43. Also in this case, each of the first yoke 31 and the second yoke 32 can be caused to abut the third yoke 43 at a plurality of surfaces. This can suppress loss of magnetic flux between the third yoke 33 and each of the first yoke 31 and the second yoke 32. Thus, the decrease of the amount of power generation can be suppressed.

In the example illustrated in FIG. 20, a rib-like protrusion 53a is provided at each of the inner peripheral side and the outer peripheral side of the third yoke 53. Thus, two surfaces generally perpendicular to each other are provided on the third yoke 53 so that each of the first yoke 31 and the second yoke 32 is caused to abut those two surfaces. Also in this case, each of the first yoke 31 and the second yoke 32 can be caused to abut the third yoke 53 at a plurality of surfaces. This can suppress loss of magnetic flux between the third yoke 53 and each of the first yoke 31 and the second yoke 32. Thus, the decrease of the amount of power generation can be suppressed.

In the example illustrated in FIG. 21, a protrusion 63a is provided at the radial (horizontal, in FIG. 21) center of the third yoke 63. Thus, two surfaces generally perpendicular to each other are provided on the third yoke 63. Furthermore, each end portion 64a, 65a of the first yoke 64 and the second yoke 65 is formed in an L-shape in cross section and engaged with the lateral side of the protrusion 63a of the third yoke 63. Thus, each of the first yoke 64 and the second yoke 65 is caused to abut the third yoke 63 at a plurality of surfaces. By this configuration, this example can also suppress loss of magnetic flux between the third yoke 63 and each of the first yoke 64 and the second yoke 65. Thus, the decrease of the amount of power generation can be suppressed.

In the example illustrated in FIG. 22, a protrusion 73a shaped like a trapezoid in cross section is provided at the radial (horizontal, in FIG. 22) center of the third yoke 73. Thus, two surfaces forming an obtuse angle are provided on the third yoke 73. Furthermore, each end portion of the first yoke 74 and the second yoke 75 is engaged with the lateral side of the protrusion 73a of the third yoke 73. Thus, each of the first yoke 74 and the second yoke 75 is caused to abut the third yoke 73 at a plurality of surfaces By this configuration, this example can also suppress loss of magnetic flux between the third yoke 73 and each of the first yoke 74 and the second yoke 75. Thus, the decrease of the amount of power generation can be suppressed.

In the example illustrated in FIG. 23, a depression 83a having a curved inner wall surface and having a generally ring shape along the circumferential direction of the coil 50 is formed on the third yoke 83. Furthermore, a curved surface portion having a generally ring shape conforming to the inner wall surface of the depression 83a is provided at each end portion of the first yoke 84 and the second yoke 85. Each of the first yoke 84 and the second yoke 85 can be caused to abut the third yoke 83 between the curved surfaces.

In this case, each of the first yoke 84 and the second yoke 85 is caused to abut the third yoke 83 at a curved surface. Even if a gap occurs due to relative misalignment between the third yoke 83 and each of the first yoke 84 and the second yoke 85, it is less likely that each of the first yoke 84 and the second yoke 85 is completely disengaged from the third yoke 83. Hence, loss of magnetic flux formed between the yokes can be suppressed, and the decrease of the amount of power generation can be suppressed.

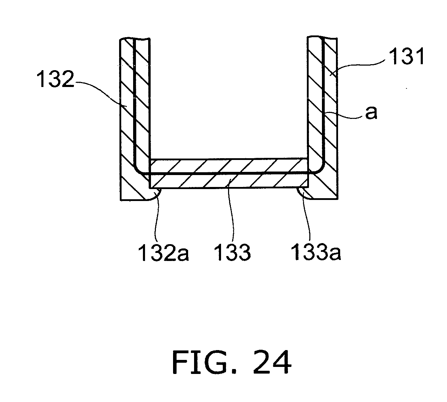

In the example illustrated in FIG. 24, each of the first yoke 131 and the second yoke 132 is caused to abut the third yoke 133 at one surface and coupled thereto. The end surface of the first yoke 131 and the second yoke 132 is swaged so that each of the first yoke 131 and the second yoke 132 abuts the third yoke 133 at a plurality of surfaces, including the swaged portions 132a, 133a. By this configuration, this example can also suppress loss of magnetic flux between the third yoke 133 and each of the first yoke 131 and the second yoke 132. Thus, the decrease of the amount of power generation can be suppressed

Here, it is preferable to select a material having good magnetization characteristics as the material of the yokes, including inductors. Specifically, examples can include magnetic materials, such as pure iron, permalloy, sendust alloy, silicon steel, and electromagnetic stainless steel. However, the material is not limited thereto, but can be modified as appropriate. Here, in view of use for a small generator, it is preferable to use electromagnetic stainless steel, permalloy, or silicon steel.

In the case where the yoke is formed as a combination of a plurality of components, the respective components can be made of different materials. For instance, magnetic flux is concentrated most heavily on the inductor. Thus, the portion including the inductor can be formed from a material having the best magnetization characteristics. Typically, materials having better magnetization characteristics tend to be more expensive. Hence, by using the expensive material only for the portion having greater necessity, the overall cost can be suppressed. Furthermore, by combining materials having different magnetization characteristics, the overall magnetization characteristics of the yoke can be adjusted to limit the amount of power generation. Here, the combination of materials can be made for each portion of the yoke. For instance, by weld bonding and the like, a material having the best magnetization characteristics can be used only for only the inductor portion where magnetic flux is concentrated most heavily.

Here, for the downsizing of the generator 1, the downsizing of the coil 50 is also an important factor. If the generator 1 is downsized, the winding space of the coil 50 also decreases. This decreases the number of turns of the coil 50, and decreases the amount of power generation. Furthermore, if the wire diameter of the coil 50 is narrowed to increase the number of turns, the internal resistance of the coil 50 increases. This increases thermal loss, and again decreases the amount of power generation.

As the result of investigation, the inventors have found that if the need of the bobbin and other insulating members can be eliminated, the winding space can be ensured, and hence the decrease of the amount of power generation can be suppressed despite downsizing the generator 1.

Typically, a coil is formed by winding an electrical wire around a cylindrical insulating member called bobbin. In this case, the thickness of the bobbin is approximately 0.5-1 mm. However, in a small generator installed on a faucet device, even such space is significant.

Thus, in this embodiment, an insulating layer is provided at the portion of the yoke in contact with the coil 50 so as to eliminate the need of the bobbin and other insulating members. Hence, the winding space of the coil 50 can be ensured. The wire diameter and the number of turns can also be increased. Consequently, the amount of power generation can be increased.
Specifically, for the coil 50 having an inner diameter of 14 mm and an outer diameter of 22 mm, insulation coating was applied to the inner surface of the yoke in contact with the coil 50 to eliminate the need of the bobbin and other insulating members. Thus, the winding space of the generator 1 was increased by approximately 70%. The insulation coating in this case can include fluororesin coating with a thickness of several ten µM. However, the material, film thickness, and coating method used for insulation coating are not limited thereto, but can be modified as appropriate.

FIG. 25 is a schematic sectional view for describing a generator according to still another embodiment of the invention. In this figure, components similar to those described above with reference to FIGS. 1 to 24 are labeled with like reference numerals, and the detailed description thereof is omitted.
The generator 1 of this embodiment includes a cap 214 instead of the pre-swirl guide vane 14 in the generator described above with reference to FIG. 1 and other figures. The cap 214 is supported on the step portion 51 a of the sealing member 51. The cap 214 is fixed to the enclosure 13, and not rotated. The bucket 15 is provided on the downstream side of the cap 214. Here, alternatively, the bucket 15 may be integrated with the center shaft 24, and both end portions of the center shaft 24 may be supported by the cap 214 and the bearing 17 so as to allow the bucket 15 integrated with the center shaft 24 to rotate.

FIG. 26A is a schematic perspective view for describing the cap 214 provided in the generator 1 shown in FIG 25.
FIG 27 is a sectional view as viewed along arrows A-A in FIG. 25.
As shown in FIGS. 26A and 27, the cap 214 is shaped so that a conical body is integrally provided on one end surface (the surface located on the upstream side) of a cylindrical body. Furthermore, a flange 214a is provided at the other end surface (the surface located on the downstream side) of the cylindrical body.

The cap 214 includes therein a space portion 214b (see FIG. 25) shaped like a cylindrical column opened at the end surface on the side provided with the flange 214a. The bucket blades 19 provided on the upstream end side of the bucket 15 are housed in the space portion 214b. One end of the center shaft 24 inserted into the bucket 15 is supported on the center axis of the cap 214 and on the surface facing the space portion 214b.

Three or more nozzles 218 communicating with the space portion 214b are provided at the peripheral surface of the cap 214. These nozzles 218 are evenly (equidistantly) arranged at angles of 120 degrees around the bucket 15.
In the arrangement of three nozzles 218, the arranging angle of each nozzle in the circumferential direction is not limited to 120 degrees. The nozzles 218 only need to be arranged so that the water flow squirted from the nozzles 218 maintains symmetry in the circumferential direction of the bucket 15. That is, the nozzles 218 can be arranged so as to reduce variation in the torque of the bucket 15 with respect to the rotation angle of the bucket 15.

If the symmetry of water flow squirted from three or more nozzles is maintained, the bucket 15 smoothly rotates, and pulsation can be suppressed. However, the water flow does not need to be completely symmetric, as long as the force applied to the bucket 15 by water pressure is balanced at the rotation center of the bucket 15 so that the pulsation in the bucket blade 19 can be suppressed.

On the other hand, three columns 301 are provided on the peripheral surface of the cap 214 to partition the flow channel to the respective nozzles 218. The nozzles 218 and the columns 301 are equally spaced along the circumferential direction of the cap peripheral surface so that the lower surface of the nozzles 218 and the columns 301 is in contact with the upper surface of the flange 214a. The nozzle 218 is opened toward the bucket blades 19 housed in the space portion 214b. The direction of the nozzle 218 is directed to the inside of the tangential direction of the circumscribed circle of the bucket blades 19.

Such nozzles 218 can cause incoming water flowing generally parallel to the rotation axis (center axis) to be redirected and squirted in the plane generally perpendicular to the rotation axis (center axis) from radially outside the bucket blade 19 toward the bucket blade 19 as indicated by arrows 62a (FIG. 27).

That is, there are provided a plurality of nozzles 218 for causing incoming water flowing generally parallel to the rotation axis (center axis) of the bucket 15 to be redirected to the direction generally perpendicular to the rotation axis (center axis) and squirted from radially outside the bucket blade 19 toward the bucket blade 19. These nozzles 218 are equidistantly (evenly) arranged around the bucket 15.

Thus, the distance traveled by water flow from the water supply inflow port through each nozzle 218 until impinging on the bucket blade 19 can be made uniform. Hence, the pulsation in the bucket blade 19 due to variation in water flow can be suppressed.

Here, in the case other than the axial flow type, the length of the water channel to each nozzle 18 is not uniform. Hence, even if the nozzles 218 are evenly arranged around the bucket 15, the distance traveled by water flow through each nozzle 218 until impinging on the bucket blade 19 cannot be made uniform.
In contrast, according to this embodiment, in the channel configuration of the axial flow type, a plurality of nozzles 218 are equidistantly arranged around the bucket 15. Thus, the distance traveled by water flow through each nozzle 218 until impinging on the bucket blade 19 can be made uniform. Consequently, the pulsation in the bucket blade 19 due to variation in water flow can be suppressed.

Here, as in the specific example shown in FIG 26B, an obstacle 204 may be provided on the peripheral surface of the cap 214. In this case, as indicated by the arrow 62a, water flows so as to bypass the obstacle 204. Also in this example, incoming water flowing generally parallel to the rotation axis of the bucket 15 can be redirected to the direction generally perpendicular to the rotation axis (center axis) and squirted by a plurality of nozzles 218 from radially outside the bucket blade 19 toward the bucket blade 19. Consequently, the effect described above with reference to FIG. 26A can be achieved,

Furthermore, according to this embodiment, three or more nozzles 218 are evenly (equidistantly) arranged around the bucket 15. Thus, jet flow with suppressed variation can be caused to impinge on the respective bucket blades 19, and the bucket can be stably rotated.
Also in this embodiment, the outer peripheral surface of the magnet M is magnetized, and the end surface of the magnet M opposed to the coil 50 is not magnetized. Thus, even if the distance between the magnet M and the coil 50 is changed, variation in the amount of power generation can be prevented.

The embodiments of the invention have been described above with reference to specific examples. However, the invention is not limited to these specific examples.
The above specific examples can be suitably modified by those skilled in the art. Such modifications are also encompassed within the scope of the invention as long as they include the features of the invention.
For instance, the shape, dimension, material, and layout of the generator and the faucet device are not limited to those illustrated, but can be suitably modified.
Furthermore, the components of the above specific examples can be combined with each other as long as feasible. Such combinations are also encompassed within the scope of the invention as long as they include the features of the invention.

### [Industrial Applicability]

This invention can provide a faucet generator capable of suppressing variation in the amount of power generation over a long period of time and maintaining high reliability over a long period of time while downsizing the radial dimension.

## Claims

1. A faucet generator comprising:
an enclosure including a supply water inflow port and a supply water outflow port and having a supply water flow channel formed in the enclosure;
a bucket provided in the supply water flow channel and including a bucket blade;
a magnet rotatable integrally with the bucket;
a bearing configured to support a force received by the bucket and the magnet due to water flow;
a coil configured to generate an electromotive force by rotation of the magnet; and
a yoke including a base surrounding the coil and a plurality of inductors extending out from the base and spaced from each other,
the coil being provided on a downstream side of the water supply flow channel relative to the magnet and opposed to the magnet,
the magnet being magnetized at an outer peripheral surface intersecting with a plane perpendicular to a rotation center axis, and not being magnetized at an end surface opposed to the coil, and
the inductor being opposed to the outer peripheral surface of the magnet and provided outside the enclosure.

2. A faucet generator comprising:
an enclosure including a supply water inflow port and a supply water outflow port and having a supply water flow channel formed in the enclosure;
a bucket provided in the supply water flow channel and including a bucket blade;
a magnet rotatable integrally with the bucket;
a bearing configured to support a force received by the bucket and the magnet due to water flow;
a coil configured to generate an electromotive force by rotation of the magnet, and
a yoke including a base surrounding the coil and a plurality of inductors extending out from the base and spaced from each other,
the coil being opposed to the magnet on an upstream side of the water supply flow channel,
the coil being provided on the upstream side of the water supply flow channel relative to the magnet and opposed to the magnet,
the magnet being magnetized at an outer peripheral surface intersecting with a plane perpendicular to a rotation center axis, and not being magnetized at an end surface opposed to the coil, and
the inductor being opposed to the outer peripheral surface of the magnet and provided outside the enclosure.

3. The generator according to claim 1 or 2, wherein
the yoke includes a bend provided at a portion connecting the base to the inductor, and
the magnet is arranged so as not to be opposed to the bend.
